# EUROPÄISCHE PATENTSCHRIFT

(11) **EP 3 365 497 B1**
(45) Veröffentlichungstag und Bekanntmachung des Hinweises auf die Patenterteilung: **09.12.2020**
(21) Anmeldenummer: 16784904.1
(22) Anmeldetag: 21.10.2016
(51) Int. Cl.: E01C 23/088

(54) **ANTRIEBSEINRICHTUNG FÜR EINE BAUMASCHINE, SOWIE BAUMASCHINE**
DRIVING DEVICE FOR A CONSTRUCTION MACHINE, AND CONSTRUCTION MACHINE
DISPOSITIF D'ENTRAÎNEMENT POUR ENGIN DE CHANTIER, ET ENGIN DE CHANTIER

(30) Priorität: 22.10.2015 DE 102015118000
(43) Veröffentlichungstag der Anmeldung: 29.08.2018
(73) Patentinhaber: Desch Antriebstechnik GmbH & Co. KG, 59759 Arnsberg (DE)
(72) Erfinder: DESCH, Hendrik Peter, 59759 Arnsberg (DE); PLATTFAUT, Bernhard, 59069 Hamm (DE)
(74) Vertreter: Schäperklaus, Jochen
(86) Internationale Anmeldenummer: PCT/EP2016/075396
(87) Internationale Veröffentlichungsnummer: WO 2017/068133

(56) Entgegenhaltungen:
- EP-A2- 1 983 105
- DE-A1-102012 012 738
- US-A1- 2015 133 246
- US-A1- 2015 227 120

## Beschreibung

Die vorliegende Erfindung betrifft eine Antriebseinrichtung für eine Baumaschine gemäß dem Oberbegriff des Anspruchs 1, sowie eine Baumaschine gemäß dem Oberbegriff des Anspruchs 10.

Eine gattungsgemäße Antriebseinrichtung ist beispielsweise bereits aus der EP 1 294 991 B2 bekannt geworden.

Eine derartige Antriebseinrichtung umfasst im Wesentlichen einen Hauptantrieb, ein Pumpenverteilergetriebe und ein Riemengetriebe. Das Riemengetriebe umfasst vorzugsweise eine erste Riemenscheibe, einen zweite Riemenscheibe und einen zwischen den Riemenscheiben angeordneten Riemen. Der Hauptantrieb treibt das Pumpenverteilergetriebe an, welches mindestens eine Abgangswelle aufweist, mit welcher die erste Riemenscheibe angetrieben wird und eine zweite Abgangswelle, mit welcher eine Hydraulikpumpe angetrieben wird. Die zweite Riemenscheibe ist vorzugsweise mit einer Arbeits- bzw. Fräswalze verbunden.

In einem normalen Betrieb treibt der Hauptantrieb, zumeist ein Dieselmotor, die nachgelagerten Komponenten an und die Fräswalze dreht sich mit einer beispielsweise zum Auffräsen von Straßenbelag geeigneten Drehgeschwindigkeit und mit angemessenem Drehmoment.

Zu Wartungszwecken ist es wünschenswert, wenn die Fräswalze mit geringerer Drehgeschwindigkeit und geringem Drehmoment gedreht bzw. auf eine bestimmte Drehstellung gefahren werden kann. Hierzu verfügt die Antriebseinrichtung über einen Hilfsantrieb, zumeist einen Hydraulikmotor oder Elektromotor.

In der EP 1 294 991 B2 wird vorgeschlagen, dass der Hilfsantrieb über eine Reibrolle mit dem Riemengetriebe gekoppelt sein soll. Dabei kann die Reibrolle mit der walzenseitigen Riemenscheibe koppelbar sein. Alternativ kann der Hilfsantrieb mit dem mindestens einen Antriebsriemen gekoppelt sein. Nach einer weiteren Alternative kann vorgesehen sein, dass der Hilfsantrieb über ein Zahnrad mit dem Riemengetriebe gekoppelt ist. Beispielsweise kann mindestens ein Antriebsriemen des Riemengetriebes aus einem Zahnriemen bestehen, der mit dem Zahnrad des Hilfsantriebes in Eingriff steht. In einer weiteren Ausführungsform kann die walzenseitige Riemenscheibe ein Zahnrad aufweisen, das mit dem Zahnrad des Hilfsantriebs im Eingriff ist.

Im Wesentlichen beschränkt sich die in der EP 1 294 991 B2 vorgeschlagene Einkopplung des Hilfsantriebs auf Komponenten des Riemengetriebes. Es ist nicht von der Hand zu weisen, dass beispielsweise das von einer Reibrolle übertragbare Drehmoment begrenzt ist und bei einem zu hohen Widerstandsmoment, z.B. bei einer Blockade der Arbeitswalze, die Reibrolle durchrutschen kann und eine Unfallgefahr reduziert werden kann.

Gleichwohl ist eine derartige Einkopplung des Hilfsantriebs mit einigen möglichen Nachteilen behaftet. Beispielsweise ist das Riemengetriebe grundsätzlich anfällig für Verschmutzung oder Spritz- bzw. Regenwasser, so dass beispielsweise die Übertragung eines immer gleichen Drehmoments nicht oder nur unzureichend gewährleistet werden kann. Auch ist der Abrieb einer Reibrolle entsprechend hoch, so dass sie tendenziell öfter ausgetauscht werden muss.

Die DE 10 2012 012738 A1 offenbart eine mobile Bodenbearbeitungsmaschine mit einer Antriebsanordnung und einem rotatorischen Arbeitsmittel, das durch die Antriebsanordnung antreibbar ist. Die Antriebsanordnung weist einen Hauptantrieb zum Antreiben des Arbeitsmittels in einem Arbeitsbetrieb und einen Hilfsantrieb zum Antreiben des Arbeitsmittels bevorzugt in einem Wartungsbetrieb auf. Das Verteilergetriebe umfasst ein Schaltgetriebe zur wahlweisen Drehzahlumschaltung des Arbeitsmittels. Der Hauptantrieb ist bevorzugt vom Arbeitsmittel abkoppelbar, wobei der Hilfsantrieb als hydraulische Pumpe ausgeführt ist, die zum Antreiben des Arbeitsmittels als Hydromotorumschaltbar ist.
Die EP 1 983 105 A2 offenbart eine selbstfahrende Baumaschine, mit einem von einem Fahrwerk getragenen Maschinenrahmen, einer Arbeitseinheit zur Durchführung von für die Baumaßnahme erforderlichen Arbeiten, und einer von dem Maschinenrahmen getragenen Antriebseinheit für den Antrieb der Arbeitswalze. Der Übertragung der Antriebsleistung von der Antriebseinheit auf die Arbeitseinheit dient eine Kraftübertragungseinrichtung. Die Antriebseinheit der selbstfahrenden Baumaschine weist einen ersten und einen zweiten Antriebsmotor auf, wobei die Kraftübertragungseinrichtung derart ausgebildet ist, dass die Antriebsleistung des ersten und zweiten Antriebsmotors gemeinsam auf die Arbeitseinheit übertragbar ist.

In US 2015/227120 A1 ist eine weitere Fräswalze offenbart.

Hier setzt die vorliegende Erfindung an und macht es sich zur Aufgabe eine verbesserte Antriebseinrichtung vorzuschlagen, insbesondere eine Antriebseinrichtung vorzuschlagen, deren Einsatz des Hilfsantriebs weniger anfällig gegen Verschmutzung oder Spritz- bzw. Regenwasser ist.

Erfindungsgemäß wird diese Aufgabe durch eine Antriebseinrichtung mit den kennzeichnenden Merkmalen des Anspruchs 1 gelöst.
Dadurch, dass der Hilfsantrieb an dem Pumpenverteilergetriebegehäuse angeflanscht ist, können die oben skizzierten Nachteile überwunden werden. Es bedarf keiner oder nur geringer weiterer Maßnahmen zur Abschirmung des Hilfsantriebs vor Schmutz und/oder Spritzwasser. Zudem ergibt sich eine äußerst kompakte Bauweise der Einheit aus Pumpenverteilergetriebe und Hilfsantrieb.

Weitere vorteilhafte Ausgestaltungen der vorgeschlagenen Erfindung ergeben sich insbesondere aus den Merkmalen der Unteransprüche.

Eine weitere Aufgabe der vorliegenden Erfindung liegt darin, eine verbesserte Baumaschine, insbesondere Straßenfräse, vorzuschlagen, insbesondere eine Baumschiene vorzuschlagen, deren Antriebseinrichtung weniger anfällig gegen Verschmutzung oder Spritz- bzw. Regenwasser ist.

Erfindungsgemäß wird diese Aufgabe durch eine Baumaschine mit den kennzeichnenden Merkmalen des Anspruchs 10 gelöst.

Weitere vorteilhafte Ausgestaltungen der vorgeschlagenen Erfindung ergeben sich insbesondere aus den Merkmalen der Unteransprüche. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Prinzipskizze einer erfindungsgemäßen Antriebseinrichtung;
- Fig. 2: eine Prinzipskizze einer erfindungsgemäßen Antriebseinrichtung mit einem angedeuteten Drehmomentverlauf im Arbeitsmodus;
- Fig. 3: eine Prinzipskizze einer erfindungsgemäßen Antriebseinrichtung mit einem angedeuteten Drehmomentverlauf im Betrieb Hilfsantrieb;
- Fig. 4: ein Pumpenverteilergetriebe mit angeflanschtem Hilfsantrieb einer erfindungsgemäßen Antriebseinrichtung;
- Fig. 4a-c: Ansichten gemäß Fig. 4
- Fig. 5: eine Detaildarstellung einer erfindungsgemäßen Antriebseinrichtung ohne Überholkupplung;
- Fig. 6: eine Detaildarstellung einer erfindungsgemäßen Antriebseinrichtung mit Überholkupplung;
- Fig. 7: eine erfindungsgemäße Baumaschine, insbesondere Straßenfräse, in einer seitlichen Ansicht und Darstellung zweier möglicher Ausrichtungen der erfindungsgemäßen Antriebseinrichtung (nur erfindungswesentliche Komponenten der Baumaschine);
- Fig. 8: die Anordnung aus Fig. 7 in einer Ansicht von Oben.

Folgende Bezugszeichen werden in den Abbildungen verwendet:
- A: Antriebseinrichtung
1 Hauptantrieb
2 Getriebegehäuse
3 Getriebeeingangswelle
4 Erste Getriebeabgangswelle
5 Schaltbare Kupplung
6 Überholkupplung
7 Hilfsantrieb
8 Pumpenverteilergetriebe / Räderkette
9 Hydraulikpumpe
10 Wälzlagerung Zahnrad
11 Riemengetriebe
12 Zweite Getriebeabgangswelle
13 Arbeitswalze
14 elastische Kupplung
- 111: erste Riemenscheibe
- 112: zweite Riemenscheibe
- 113: Riemen

Eine erfindungsgemäße Antriebseinrichtung A umfasst im Wesentlichen einen Hauptantrieb 1 und einen Hilfsantrieb 7, ein Pumpenverteilergetriebe 8, ein Riemengetriebe 11, und mindestens eine Hydraulikpumpe 9.

Der Hauptantrieb 1 treibt das Pumpenverteilergetriebe 8 an. Der Hauptantrieb 1 kann beispielsweise als Dieselmotor ausgestaltet sein.

Das Riemengetriebe umfasst vorzugsweise eine erste Riemenscheibe 111, einen zweite Riemenscheibe 112 und mindestens einen zwischen den Riemenscheiben angeordneten Riemen 113.

Das Pumpenverteilergetriebe 8 umfasst vorzugsweise eine Räderkette mit einem Getriebeeingang und mindestens zwei Getriebeausgängen. Das Pumpenverteilergetriebe 8 ist vorzugsweise als Rädergetriebe ausgestaltet. Denkbar sind aber auch andere Bauformen. Die Getriebeeingänge bzw. Getriebeausgänge sind beispielsweise als Hohlwellen oder Zahnräder bzw. Zahnradflansche ausgestaltet. Hier sind mannigfaltige Ausführungsformen denkbar.

Der Hauptantrieb 1 ist vorzugsweise über eine Getriebeeingangswelle 3 mit dem Getriebeeingang des Pumpenverteilergetriebes 8 verbunden. Zwischen Hauptantrieb 1 und Getriebeeingangswelle 3 ist vorzugsweise eine elastische Kupplung 14 vorgesehen.

Das Riemengetriebe 11 ist über eine erste Getriebeabgangswelle 4 mit dem ersten Getriebeausgang des Pumpenverteilergetriebes 8 verbunden, wobei eine schaltbare Kupplung 5 zwischen dem ersten Getriebeausgang und der ersten Getriebeabgangswelle 4 vorgesehen ist. Die erste Getriebeabgangswelle 4 wiederum ist mit dem Riemengetriebe 11, insbesondere der ersten Riemenscheibe 111 verbunden. Mit anderen Worten, kann die erste Abgangswelle 4 bzw. das Riemengetriebe 11 über die schaltbare Kupplung 5 wahlweise von dem Drehmomentfluss des Pumpenverteilergetriebes 8 zu bzw. abgekuppelt werden.

Die zweite Abgangswelle 12 ist vorzugsweise mit dem zweiten Getriebeausgang des Pumpenverteilergetriebe 8 und mit der mindestens einen Hydraulikpumpe 9 verbunden.

Bei den oben genannten Verbindungen handelt es sich vornehmlich um zur Übertragung von Drehmoment geeigneten Verbindungen.

Das Pumpenverteilergetriebe 8 ist in einem Pumpenverteilergetriebegehäuse 2 untergebracht. Auch können Pumpenverteilergetriebe und weitere Komponenten, wie beispielsweise Hydraulikpumpe 9 und/oder eine Überholkupplung 6, in dem Pumpenverteilergetriebegehäuse 2 untergebracht sein, so dass die Wellen sozusagen intern angelegt sind.

Es ist weiterhin vorgesehen, dass die erste Getriebeausgangswelle 4 durch das Pumpenverteilergetriebegehäuse 2, insbesondere das Pumpenverteilergetriebe 8, insbesondere die Räderkette, vorzugsweise durch ein Zahnrad des ersten Getriebeausgangs, hindurchgeführt ist. Hierzu kann eine Wälzlagerung 10 vorgesehen sein bzw. das Zahnrad des ersten Getriebeausgangs ist per Wälzlagerung 10 auf der ersten Getriebeausgangswelle gelagert. Durch diese Maßnahme sind erfindungsgemäß der Hilfsantrieb 7 und die Überholkupplung 6 auf der dem Riementrieb 11 abgewandten Seite des Pumpenverteilergetriebegehäuses 2 angeordnet, so dass sich ein kompakter Aufbau ergibt.

Eine ebenfalls erfindungsgemäße Baumaschine umfasst im Wesentlichen die erfindungsgemäße Antriebseinrichtung und eine Arbeitswalze 13. Vorzugsweise ist die Baumaschine als Straßenfräse ausgestaltet, so dass es sich bei der Arbeitswalze um eine Fräswalze 13 handelt. Die Baumaschine weist zudem weitere Komponenten, wie Chassis, Fahrwerk, etc. auf, die jedoch an dieser Stelle keiner weiteren Erklärung bedürfen.

Die zweite Riemenscheibe 112 ist mit der Arbeitswalze 13 verbunden.

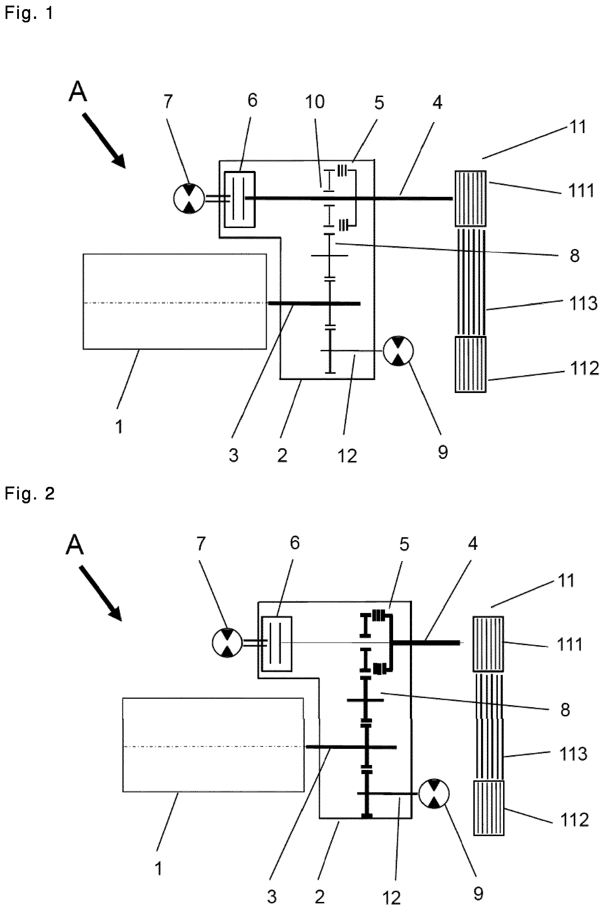

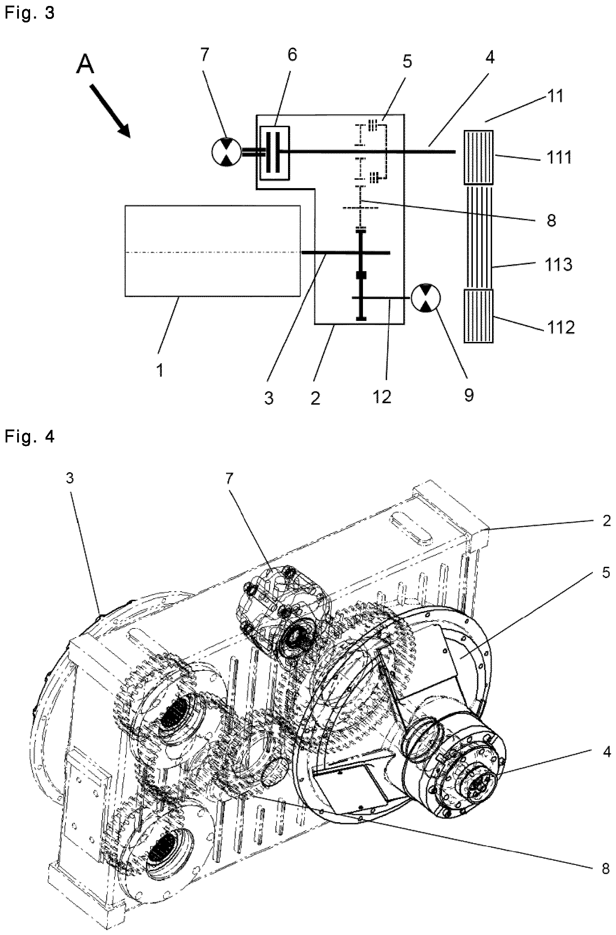

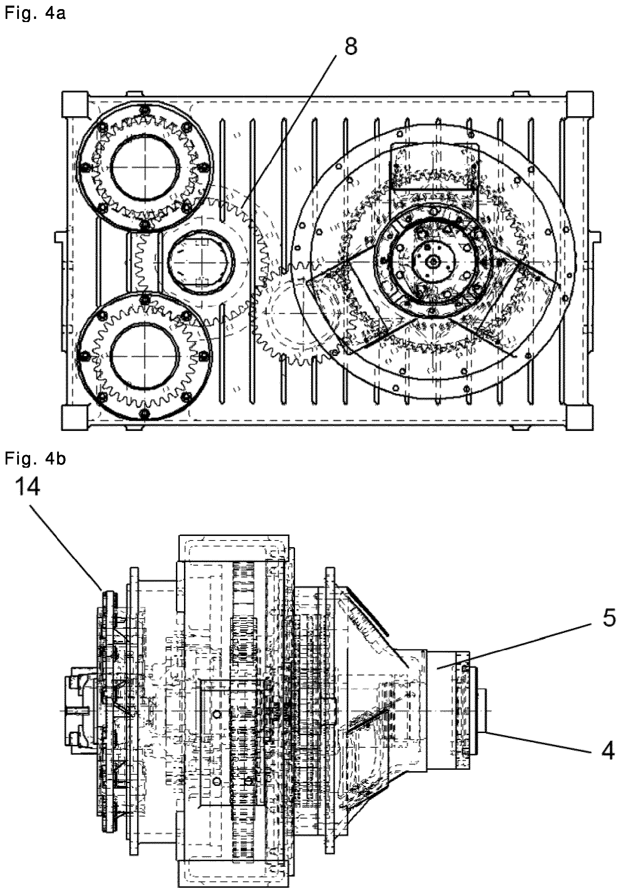

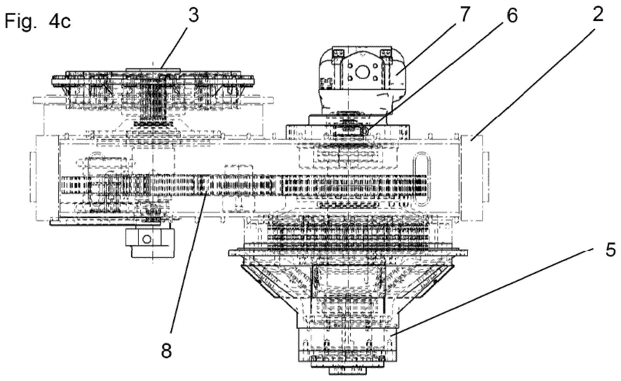

Weitere Details der vorliegenden Erfindung sollen nachfolgend beispielsweise anhand einer Straßenfräse als Baumaschine erläutert werden. Die Ausführungen beziehen sich insbesondere auf die Fig. 1 bis 4.

Im Arbeitsmodus treibt der Hauptantrieb, insbesondere der Dieselmotor 1, über die Getriebeeingangswelle 3, das Pumpenverteilergetriebe, insbesondere der Räderkette 8, und bei geschlossenen Kupplung 5 die Getriebeabgangswelle 4 an.

Die erste Getriebeabgangswelle 4 treibt über das Riemengetriebe, insbesondere über den Keilriementrieb 11, die Frästrommel 13 an.

Der Hilfsmotor 7 wird vorzugsweise durch die Überholkupplung 6 von der drehenden ersten Getriebeabgangswelle 4 getrennt.

Über das Pumpenverteilergetriebe, insbesondere die Räderkette 8, und die entsprechende zweite Getriebeabgangswelle 12 werden gleichzeitig ein oder mehrere Hydraulikpumpen 9 angetrieben. Die Hydraulikpumpen dienen vorzugsweise gleichzeitig zur Versorgung des Hilfsantriebs 7 wenn dieser als Hydraulikmotor ausgeführt ist.

Die Funktion des Hilfsantriebs stellt sich wie folgt dar.

Im Servicefall soll der Hilfsantrieb 7 die erste Getriebeabgangswelle 4 langsam auf Anforderung drehen um z. B. das Wechseln der Meißelbestückung an der Frästrommel 13 zu unterstützen.

Hierzu ist im Servicefall die Kupplung 5 geöffnet und unterbricht dadurch die vorzugsweise reibschlüssige Verbindung zwischen dem Pumpenverteilergetriebe, insbesondere der Räderkette 8, und Getriebeabgangswelle 4.

Der Dieselmotor treibt nur noch die Hydraulikpumpen 9 über das Pumpenverteilergetriebe, insbesondere die Räderkette 8, an.

Durch Einschalten des Hilfsmotors 7 wird mittels der Überholkupplung 6 eine Drehbewegung und ein Drehmoment auf die erste Getriebeabgangswelle 4 übertragen.

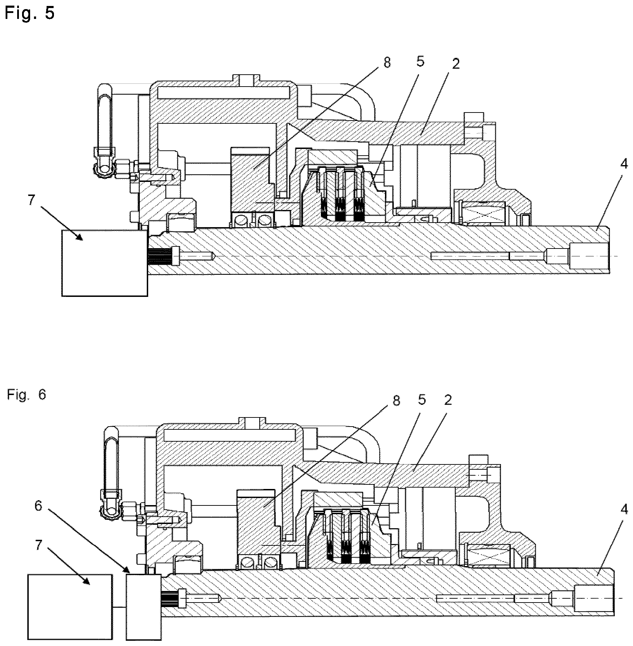

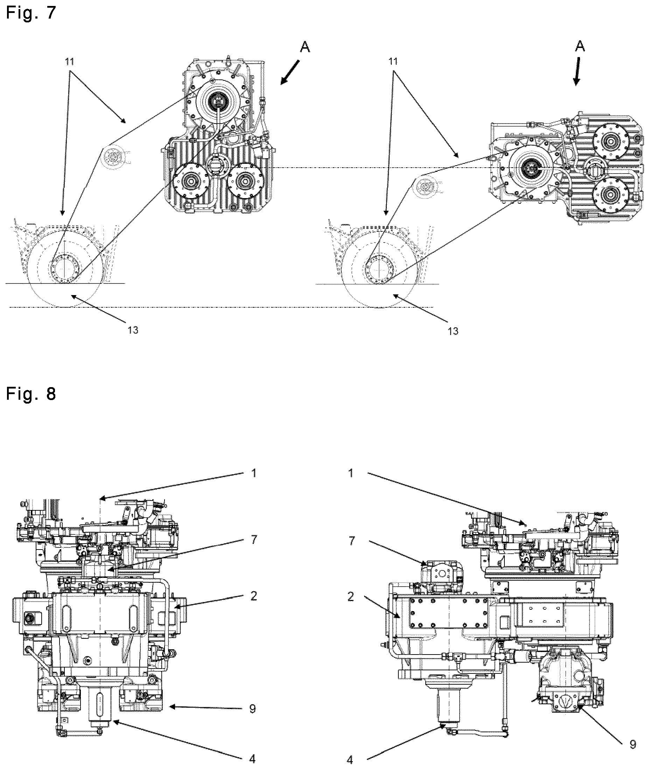

Weitere Details der vorliegenden Erfindung sollen nachfolgend beispielsweise anhand einer Straßenfräse als Baumaschine erläutert werden. Die Ausführungen beziehen sich insbesondere auf die Fig. 5 bis 8.

Eine Straßenfräse dient zum Abtrag des Straßenbelages. Dafür ist sie mit einer Frästrommel ausgerüstet, die mit Meißeln in unterschiedlicher Anordnung bestückt ist.

Da diese Meißel einem erheblichen Verschleiß unterworfen sind, müssen sie entsprechend oft gewechselt werden. Aus Sicherheitsgründen muss dabei der Dieselmotor, der üblicherweise die Frästrommel antreibt, ausgeschaltet sein und still stehen. Um dann beim Meißelwechsel die Frästrommel langsam weiter zu drehen, muss dafür die Trommel von Hand weiter bewegt werden.

Da die meisten Straßenfräsen mittlerweile ein Pumpenverteilergetriebe an der Schwungradseite des Dieselmotors besitzen, ist die erfinderische Idee, dieses Verteilergetriebe anders zu gestalten, so dass auf der Dieselmotorseite die Anordnung eines elektrisch oder hydraulisch angetriebenen Hilfsmotors möglich wird.

Die Straßenfräsen haben üblicherweise eine 24V - Batterie oder auch elektrisch angetriebene Notaggregate für Hydraulik "an Bord", so dass der Antrieb des Hilfsmotors auch ohne den laufenden Dieselmotor möglich ist.

Der als Dieselmotor ausgestaltete Antrieb treibt über eine elastische Kupplung die Getriebeeingangswelle an. Auf der ersten Getriebeausgangswelle, welche von der Räderkette angetrieben wird, befindet sich ein gelagerter Kupplungszahnkranz einer nass- (in Öl) oder trockenlaufenden Schaltkupplung, welcher wiederum mit einem Zahnrad der Räderkette verbunden ist. Am Ende der ersten Getriebeausgangswelle, außerhalb des Getriebes, sitzt die erste Riemenscheibe, welche über einen Riementrieb die Fräswalze antreibt.

Die Funktion lässt sich wie folgt beschreiben. Im ausgeschalteten Zustand der Schaltkupplung dreht die dieselmotorisch angetriebene Getriebeeingangswelle mit der Zahnradkette und dem gelagerten Kupplungszahnkranz. Die erste Getriebeausgangswelle mit den Innenteilen der ausgeschalteten Kupplung, sowie die erste Riemenscheibe am Wellenausgang stehen still; die Fräswalze steht.

Im eingeschalteten Zustand der Schaltkupplung wird der gelagerte Zahnkranz mit den Innenteilen der Schaltkupplung verbunden, so dass auch die erste Getriebeausgangswelle dreht und die Fräswalze antreibt. Die für den Fräsbetrieb notwendigen Hydraulikpumpen werden über weitere Räderketten bzw. die zweite Getriebeausgangswelle im Getriebe angetrieben.

Bei dem zuvor beschriebenen Meißelwechsel wird nun der Dieselmotor gestoppt und steht still. Die Schaltkupplung ist geöffnet und zur ersten Getriebeausgangswelle hin drehbar gelagert.

So kann die erste Getriebeausgangswelle langsam von einem Elektro- oder Hydraulikmotor angetrieben werden. Diese Welle wiederum treibt den Riementrieb der Fräswalze parallel zu der stillstehenden Dieselmotorwelle an.

Damit der Elektro- oder Hydraulikmotor im normalen Fräsbetrieb nicht ständig mit dreht, ist die Anordnung eines Freilaufs zwischen der ersten Getriebeausgangswelle und dem Hilfsantrieb möglich.

## Patentansprüche

1. Antriebseinrichtung (A) für eine Baumaschine, umfassend
- einen Hauptantrieb (1),
- ein Pumpenverteilergetriebe (8) mit einem Pumpenverteilergetriebegehäuse (2),
- mindestens eine Hydraulikpumpe (9),
- ein Riemengetriebe (11) und
- einen Hilfsantrieb (7),
wobei der Hilfsantrieb (7) an dem Pumpenverteilergetriebegehäuse (2) angeflanscht ist, wobei das Pumpenverteilergetriebe (8) einen Getriebeeingang und mindestens einen ersten Getriebeausgang und einen zweiten Getriebeausgang aufweist, wobei das Riemengetriebe (11) über eine erste Getriebeabgangswelle (4) mit dem ersten Getriebeausgang des Pumpenverteilergetriebes (8) verbunden ist, wobei die erste Getriebeabgangswelle (4) durch das Pumpenverteilergetriebegehäuse (2) hindurchgeführt ist, wobei eine schaltbare Kupplung (5) zwischen dem Getriebeausgang und der ersten Getriebeabgangswelle (4) vorgesehen ist, **dadurch gekennzeichnet, dass** der Hilfsantrieb (7) über eine Überholkupplung (6) mit der ersten Getriebeabgangswelle (4) verbunden ist, wobei die Überholkupplung (6) im Pumpenverteilergetriebegehäuse (2) aufgenommen ist, und wobei der Hilfsantrieb (7) und die Überholkupplung (6) auf der dem Riemengetriebe (11) abgewandten Seite des Pumpenverteilergetriebegehäuses (2) angeordnet sind.

2. Antriebseinrichtung nach Anspruch 1, **dadurch gekennzeichnet, dass** der Hauptantrieb (1) als Dieselmotor ausgestaltet ist.

3. Antriebseinrichtung nach mindestens einem der vorhergehenden Ansprüche, **dadurch gekennzeichnet, dass** der Hauptantrieb (1) über eine Getriebeeingangswelle (3) mit dem Getriebeeingang des Pumpenverteilergetriebes (8) verbunden ist.

4. Antriebseinrichtung nach mindestens einem der vorhergehenden Ansprüche, **dadurch gekennzeichnet, dass** die mindestens eine Hydraulikpumpe (9) über eine zweite Getriebeabgangswelle (12) mit dem zweiten Getriebeausgang des Pumpenverteilergetriebes (8) verbunden ist.

5. Antriebseinrichtung nach mindestens einem der vorhergehenden Ansprüche, **dadurch gekennzeichnet, dass** das Riemengetriebe (11) eine erste Riemenscheibe (111), eine zweite Riemenscheibe (112) und mindestens einen zwischen den Riemenscheiben aufgespannten Riemen (113) umfasst.

6. Antriebseinrichtung nach dem vorhergehenden Anspruch, **dadurch gekennzeichnet, dass** die erste Riemenscheibe (111) mit der ersten Getriebeabgangswelle (4) verbunden ist.

7. Antriebseinrichtung nach mindestens einem der vorhergehenden Ansprüche, **dadurch gekennzeichnet, dass** der Hilfsantrieb (7) mit der ersten Getriebeabgangswelle (4) verbunden ist.

8. Antriebseinrichtung nach mindestens einem der vorhergehenden Ansprüche, **dadurch gekennzeichnet, dass** der Hilfsantrieb (7) als Hydraulikmotor oder Elektromotor ausgestaltet ist.

9. Antriebseinrichtung nach mindestens einem der vorhergehenden Ansprüche, **dadurch gekennzeichnet, dass** die erste Getriebeabgangswelle (4) durch das Pumpenverteilergetriebe (8), insbesondere die Räderkette, vorzugsweise durch ein Zahnrad des ersten Getriebeausgangs hindurchgeführt ist.

10. Baumaschine, insbesondere Straßenfräse, umfassend eine Arbeitswalze (13), **dadurch gekennzeichnet, dass** die Baumaschine mit einer Antriebseinrichtung (A) gemäß mindestens einem der vorhergehenden Ansprüche ausgestattet ist.

11. Baumaschine nach Anspruch 10, wobei die Antriebseinrichtung zumindest nach Anspruch 5 oder 6 ausgeführt ist, **dadurch gekennzeichnet, dass** die Arbeitswalze (13) mit der zweiten Riemenscheibe (112) verbunden ist.

12. Baumaschine nach mindestens einem der Ansprüche 10 oder 11, **dadurch gekennzeichnet, dass** es sich bei der Arbeitswalze (13) um eine Fräswalze handelt.

## Claims

1. Drive apparatus (A) for a construction machine, comprising
- a main drive (1),
- a pump transfer gear (8) with a
pump transfer gear case (2),
- at least one hydraulic pump (9),
- a belt transmission (11) and
- an auxiliary drive (7),
wherein the auxiliary drive (7) is flanged to the pump transfer gear case (2), wherein the pump transfer gear (8) has a gear case input and at least a first gear case output and a second gear case output, wherein the belt transmission (11) is connected via a first gear case output shaft (4) to the first gear case output of the pump transfer gear (8), wherein the first gear case output shaft (4) is guided through the pump transfer gear case (2), wherein a switchable clutch (5) is provided between the gear case output and the first gear case output shaft (4), **characterised in that** the auxiliary drive (7) is connected via an overrunning clutch (6) to the first gear case output shaft (4), wherein the overrunning clutch (6) is received in the pump transfer gear case (2), and wherein the auxiliary drive (7) and the overrunning clutch (6) are arranged on the side of the pump transfer gear case (2) facing away from the belt transmission (11).

2. Drive apparatus according to claim 1, **characterised in that** the main drive (1) is configured as a diesel engine.

3. Drive apparatus according to at least one of the preceding claims, **characterised in that** the main drive (1) is connected via a gear case input shaft (3) to the gear case input of the pump transfer gear (8).

4. Drive apparatus according to at least one of the preceding claims, **characterised in that** the at least one hydraulic pump (9) is connected via a second gear case output shaft (12) to the second gear case output of the pump transfer gear (8).

5. Drive apparatus according to at least one of the preceding claims, **characterised in that** the belt transmission (11) comprises a first pulley (111), a second pulley (112) and at least one belt (113) mounted between the pulleys.

6. Drive apparatus according to the preceding claim, **characterised in that** the first pulley (111) is connected to the first gear case output shaft (4).

7. Drive apparatus according to at least one of the preceding claims, **characterised in that** the auxiliary drive (7) is connected to the fist gear case output shaft (4).

8. Drive apparatus according to at least one of the preceding claims, **characterised in that** the auxiliary drive (7) is configured as a hydraulic motor or electric motor.

9. Drive apparatus according to at least one of the preceding claims, **characterised in that** the first gear case output shaft (4) is guided through the pump transfer gear (8), in particular the gear chain, preferably through a gear wheel of the first gear case output.

10. Construction machine, in particular road milling machine, comprising a work roll (13), **characterised in that** the construction machine is equipped with a drive apparatus (A) according to at least one of the preceding claims.

11. Construction machine according to claim 10, wherein the drive apparatus is designed at least according to claim 5 or 6, **characterised in that** the work roll (13) is connected to the second pulley (112).

12. Construction machine according to at least one of claims 10 or 11, **characterised in that** the work roll (13) is a milling drum.

## Revendications

1. Dispositif d'entraînement (A) pour un engin de chantier, comprenant
- un entraînement principal (1),
- un mécanisme de distribution de pompe (8) pourvu d'un logement de mécanisme de distribution de pompe (2),
- au moins une pompe hydraulique (9),
- une transmission à courroie (11) et
- un mécanisme d'entraînement auxiliaire (7),
dans lequel le mécanisme d'entraînement auxiliaire (7) est bridé au logement de mécanisme de distribution de pompe (2), dans lequel le mécanisme de distribution de pompe (8) présente une entrée de transmission et au moins une première sortie de transmission et une seconde sortie de transmission, dans lequel la transmission à courroie (11) est reliée par un premier arbre de sortie de transmission (4) à la première sortie de transmission du mécanisme de distribution de pompe (8), dans lequel le premier arbre de sortie de transmission (4) passe à travers le logement de mécanisme de distribution de pompe (2), dans lequel un embrayage commutable (5) est prévu entre la sortie de transmission et le premier arbre de sortie de transmission (4), **caractérisé en ce que** le mécanisme d'entraînement auxiliaire (7) est relié par un embrayage à roue libre (6) au premier arbre de sortie de transmission (4), dans lequel l'embrayage à roue libre (6) est reçu dans le logement de mécanisme de distribution de pompe (2), et dans lequel le mécanisme d'entraînement auxiliaire (7) et l'embrayage à roue libre (6) sont disposés sur le côté détourné de la transmission à courroie (11) du logement de mécanisme de distribution de pompe (2).

2. Dispositif d'entraînement selon la revendication 1, **caractérisé en ce que** l'entraînement principal (1) est conçu comme un moteur diesel.

3. Dispositif d'entraînement selon au moins l'une quelconque des revendications précédentes, **caractérisé en ce que** l'entraînement principal (1) est relié par un arbre d'entrée de transmission (3) à l'entrée de transmission du mécanisme de distribution de pompe (8).

4. Dispositif d'entraînement selon au moins l'une quelconque des revendications précédentes, **caractérisé en ce que** l'au moins une pompe hydraulique (9) est reliée par un second arbre de sortie de transmission (12) à la seconde sortie de transmission du mécanisme de distribution de pompe (8).

5. Dispositif d'entraînement selon au moins l'une quelconque des revendications précédentes, **caractérisé en ce que** la transmission à courroie (11) comprend une première poulie (111), une seconde poulie (112) et au moins une courroie (113) tendue entre les poulies.

6. Dispositif d'entraînement selon la revendication précédente, **caractérisé en ce que** la première poulie (111) est reliée au premier arbre de sortie de transmission (4).

7. Dispositif d'entraînement selon au moins l'une quelconque des revendications précédentes, **caractérisé en ce que** le mécanisme d'entraînement auxiliaire (7) est relié au premier arbre de sortie de transmission (4).

8. Dispositif d'entraînement selon au moins l'une quelconque des revendications précédentes, **caractérisé en ce que** le mécanisme d'entraînement auxiliaire (7) est conçu comme un moteur hydraulique ou un moteur électrique.

9. Dispositif d'entraînement selon au moins l'une quelconque des revendications précédentes, **caractérisé en ce que** le premier arbre de sortie de transmission (4) passe à travers le mécanisme de distribution de pompe (8), en particulier le rouage, de préférence à travers une roue dentée de la première sortie de transmission.

10. Engin de chantier, en particulier engin de fraisage de chaussée, comprenant un cylindre de travail (13), **caractérisé en ce que** l'engin de chantier est conçu avec un dispositif d'entraînement (A) selon au moins l'une quelconque des revendications précédentes.

11. Engin de chantier selon la revendication 10, dans lequel le dispositif d'entraînement est réalisé au moins selon la revendication 5 ou 6, **caractérisé en ce que** le cylindre de travail (13) est relié à la seconde poulie (112).

12. Engin de chantier selon au moins l'une quelconque des revendications 10 ou 11, **caractérisé en ce que** le cylindre de travail (13) est un cylindre de fraisage.
